# EUROPEAN PATENT SPECIFICATION

(11) **EP 1 073 831 B1**
(45) Date of publication and mention of the grant of the patent: **02.04.2003**
(21) Application number: 99905393.7
(22) Date of filing: 25.01.1999
(51) Int. Cl.: F01N 3/28, F23G 7/06

(54) **CATALYTIC GAS TREATMENT DEVICE**
ABGASKATALYSATOR
DISPOSITIF DE TRAITEMENT CATALYTIQUE DES GAZ

(30) Priority: 26.01.1998 SE 9800197
(43) Date of publication of application: 07.02.2001
(73) Proprietor: HEED, Björn, S-412 61 Göteborg (SE)
(72) Inventor: HEED, Björn, S-412 61 Göteborg (SE)
(74) Representative: Lindberg, Klas Valter Bo
(86) International application number: SE9900095
(87) International publication number: WO99037897

(56) References cited:
- WO-A1-96/04509

## Description

The present invention relates to a catalytic gas-mixture treatment device of the kind defined in the preamble of the appended claim 1.

The Swedish Patent No. 503 172 describes a catalytic device comprising a catalyst-coated, patterned band, which is folded into a package for the purpose of simultaneously achieving heat exchange and catalytic treatment of a flow of gas. In the process, the flow may be divided into several parallel part flows, which are again united into one single flow. This is effected by blowing the gas flow into and withdrawing it from the package at opposite package sides at one of the package ends. There is no need for a separate gas-distributing device of manifold type and as long as the temperature is moderate, there is no difficulty in sealing the band-package end against the end wall of the enclosure or casing. Such sealing is necessary to prevent untreated gas from leaking past the heat exchange-catalyst unit.

When the temperature of the entering gas is high, which sometimes is the case in the treatment of motor vehicle exhaust gases, it may be difficult to achieve efficient sealing of this kind. Conventional sealing materials or sealing compounds of rubber or plastics cannot withstand the high temperatures involved. A sheet of ceramic fibrous felt may be used as the seal along the sides of the band package, where considerable surfaces of contact exist. On the other hand, at the end walls, the seal is to be applied against the thin edges of the band, which makes efficient sealing much more difficult to achieve.

In accordance with the present invention a solution to this sealing problem has been found according to the characterising portion of claim 1.

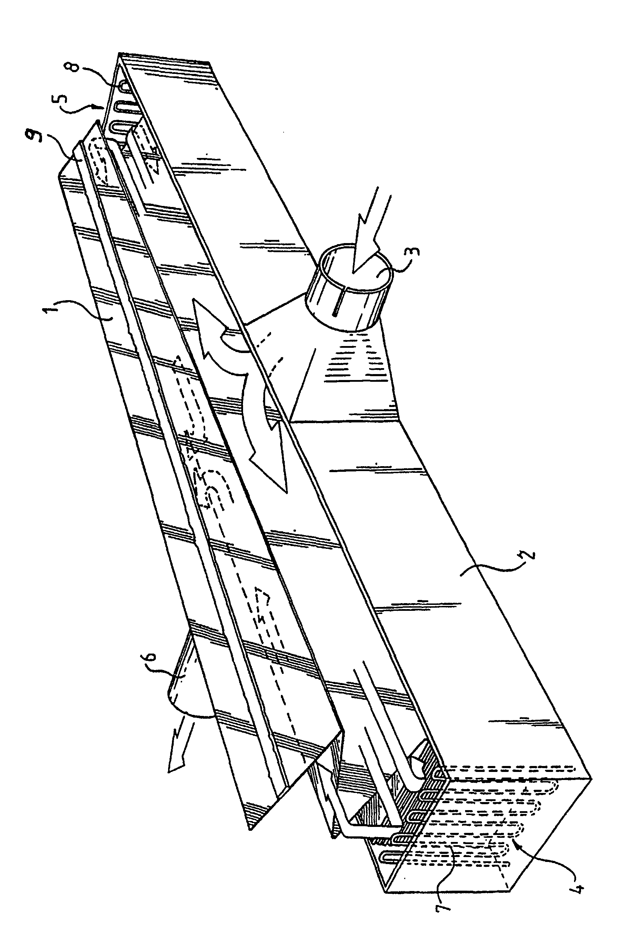

One embodiment of the invention is illustrated in the accompanying drawing figure. For the sake of clarity, the drawing figure illustrates the inventive object in an unassembled condition and without the top of the casing 2. A package 1 of a patterned and folded band is received inside a casing 2. Gas enters through an inlet port 3, in the example shown centrally on one side of the band package. The gas flow divides into two oppositely directed part flows, each flowing towards its respective package end and the gas reversal chambers 4 and 5 located there. In the gas reversal chambers the gas may be heated by the heating elements 7 and 8, respectively, alternatively by hot gas or hot air supplied to the gas reversal chambers, and from these chambers the gas reverses, flowing along the opposite side of the band, towards the centre of the band package and exits through the outlet port 6.

As the gas passes through the device, recuperative exchange of heat takes place via the band material between gas on its way to and gas on its way from, respectively, the gas reversal chambers. The band constituting the band package consequently serves both as a heat-exchange partition wall between the incoming and exiting flows and as a catalyst carrier. In this manner, the heat-exchange process is made independent of the temperature of the incoming gas and the catalytic treatment may be carried out at an high temperature without considerable amounts of energy having to be supplied in the gas reversal chambers.

Owing to the division of the incoming flow into two part flows, one to each gas reversal chamber 4, 5, sealing against the end walls is not necessary. The only seals needed are the seal positioned between the bottom face of the package 1 and the casing bottom (not shown in the drawing figure) and the seal 9 required between the upper face of the package 1 and the casing top, not included in the drawing figure. Owing to the considerable surface of contact, these seals may both consist of ceramic fibrous felt. No sealing is required at the two package ends and the gas reversal chambers 4, 5. This feature makes the inventive device highly suitable for treatment of gas entering the device at a high temperature. In some cases, for example to prevent damage to the catalyst coating, it may be necessary to cool the gas in the gas reversal chambers rather than heating it. Advantageously, cooling is effected by supply of cool air or gas to the gas reversal chambers 4, 5 or, alternatively, by means of refrigerating coils or refrigerating elements located therein. As a result of the heat exchange taking place between the gas flowing towards the gas reversal chambers and the gas mixture flowing towards the outlet port, the major part of the band package will have a lower temperature than the incoming gas.

A further advantage of the invention is that for a given width and height of the band package the pressure drop of the gas passing through the device is smaller than it would have been, had the entire gas flow been forced to pass through a package in one direction only.

In the manner described in the Swedish Patent No 503 172 it may be advantageous, depending on the prevailing circumstances, to coat both band sides or only one side thereof with a catalyst. As described in that publication, it may also in some instances be advantageous to coat the two band sides with a different catalyst. Furthermore, as also described therein, it may sometimes be advantageous to coat only the parts of the band closest to the gas reversal chambers with a catalyst.

The design and arrangement of the temperature-modifying and temperature-controlling devices, such as heating and/or refrigerating devices, that are located in the gas reversal chambers, may be altered in many different ways without departure from the inventive idea. Also, the devices in the two chambers may be of a mutually different nature.

## Claims

1. A device for catalytic treatment of gas mixtures, comprising a heat exchanger, the heat exchanger having at least one inlet and at least one outlet, wherein:
a) a catalyst is spread on a partition wall, the partition wall acting as a carrier for the catalyst,
b) the partition wall consists of a shaped patterned band of metal or ceramic, which is folded in an accordion-like manner into a package (1),
c) the package forms alternately disposed channels with exchange of heat taking place between the channels through the band material, the geometry of the channels being determined by the folding an the shaped pattern of the band, and
d) the package (1) is contained in a casing (2), **characterised in**
**that** the alternately disposed channels in the package (1) are connected to an inlet or an outlet (3, 6) of the casing (2) located at the sides, i.e. the planes defined by the fold lines of the package (1), of the package (1) and to gas reversal chambers (4, 5) located one at both ends, i.e. the ends of the fold lines, of the package (1) arranged so that when the gas flows through the device, heat will be exchanged between the incoming and exiting flows as the flow direction changes from a direction of entry in the inlet (3) at an angle to the band folds to mutually opposite directions along a first side of said sides of the band in the package (1), and from there, following reversal externally of the package (1) ends in the respective gas reversal chamber (4,5) to the opposite side of said first side of the band in the package (1) while flowing in the opposite direction along the fold lines of the band folds, and from there towards a direction of exit in the outlet (6) at an angle to said band folds.

2. A device for catalytic treatment of gas as claimed in claim 1, **characterised in that** at least one of the gas reversal chambers (4, 5) houses devices controlling and affecting the temperature of the gas flowing past said chambers, said devices preferably being heating devices (7, 8).

3. A device for catalytic treatment of gas as claimed in claim 2, **characterised in that** at least in one of the gas reversal chambers said heating device is an electric heater.

4. A device for catalytic treatment of gas as claimed in claim 2, **characterised in that** it comprises heating devices including burners using gas or liquid fuel.

5. A device for catalytic treatment of gas as claimed in claim 1, **characterised in that** it is adapted for heating at least one of the gas reversal chambers (4, 5) by means of supply of hot gas.

6. A device for catalytic treatment of gas as claimed in claim 1, **characterised in that** it is adapted for cooling at least one of the gas reversal chambers (4, 5) by means of supply of cool gas.

7. A device for catalytic treatment of gas as claimed in claim 1, **characterised in that** it comprises refrigerating elements disposed in the gas reversal chamber in question.

8. A device for catalytic treatment of gas as claimed in claims 1 - 6, **characterised in that** the band is coated with a catalyst on the inlet side of the band and possibly also on the outlet side of the band.

9. A device for catalytic treatment of gas as claimed in claim 1 - 6, **characterised in that** the band is coated with a catalyst only on the outlet side of the band.

10. A device for catalytic treatment of gas as claimed in claims 1 - 6, **characterised in that** the two sides of the band are coated with a different kind of catalyst.

11. A device for catalytic treatment of gas as claimed in claim 1 - 9, **characterised in that** the band is coated with a catalyst only on the band parts closest to the gas reversal chambers (4, 5).

## Revendications

1. Appareil pour le traitement catalytique de mélanges gazeux, comprenant un échangeur de chaleur, l'échangeur de chaleur ayant au moins une entrée et au moins une sortie, où :
a) un catalyseur est étalé sur un mur de partition, le mur de partition agissant comme support pour le catalyseur,
b) le mur de partition consiste en une bande de métal ou céramique formée modelée qui est pliée en accordéon dans un emballage (1),
c) l'emballage forme des canaux disposés alternativement, un échange de chaleur ayant lieu entre les canaux à travers la bande de matière, la géométrie des canaux étant déterminée par le pliage sur le modèle formé de la bande, et
d) l'emballage (1) est contenu dans un casier (2),
**caractérisé en ce que** les canaux disposés alternativement dans l'emballage (1) sont connectés par une entrée ou une sortie (3, 6) du casier (2) située sur les côtés, c'est-à-dire les plans définis par les lignes de pliage de l'emballage (1), de l'emballage (1) et vers les chambres d'inversion de gaz (4, 5) situées chacune aux deux extrémités, c'est-à-dire aux extrémités des lignes de pliage, de l'emballage (1), disposées de manière à ce que, lorsque le gaz s'écoule à travers l'appareil, la chaleur s'échangera entre les flux entrants et sortants lorsque la direction du flux change d'une direction de pénétration dans l'entrée (3) à un angle par rapport aux plis de la bande vers des directions mutuellement opposées le long d'un premier côté des dits côtés de la bande dans l'emballage (1) et, de là, suite à l'inversion, à l'extérieur de l'emballage (1) se termine dans les chambres respectives d'inversion de gaz (4, 5) vers l'extrémité opposée du dit premier côté de la bande dans l'emballage (1) tout en s'écoulant dans la direction opposée le long des lignes de pliage des plis de la bande et de là vers une direction de sortie dans la sortie (6) en angle par rapport aux dits plis de bande.

2. Appareil pour le traitement catalytique de gaz selon la revendication 1, **caractérisé en ce qu'**au moins une ces chambres d'inversion de gaz (4, 5) abrite des appareils contrôlant et affectant la température du gaz s'écoulant à travers lesdites chambres, lesdits appareils étant préférablement des appareils de chauffage (7, 8).

3. Appareil pour le traitement catalytique de gaz selon la revendication 2, **caractérisé en ce qu'**au moins dans une des chambres d'inversion de gaz, ledit appareil de chauffage est un radiateur électrique.

4. Appareil pour le traitement catalytique de gaz selon la revendication 2, **caractérisé en ce qu'**il comprend des appareils de chauffage, y compris des brûleurs utilisant du gaz ou du fuel liquide.

5. Appareil pour le traitement catalytique de gaz selon la revendication 1, **caractérisé en ce qu'**il est adapté pour le chauffage d'au moins une des chambres d'inversion de gaz (4, 5) au moyen d'une alimentation en gaz chaud.

6. Appareil pour le traitement catalytique de gaz selon la revendication 1, **caractérisé en ce qu'**il est adapté pour le refroidissement d'au moins une des chambres d'inversion de gaz (4, 5) au moyen d'une alimentation en gaz frais.

7. Appareil pour le traitement catalytique de gaz selon la revendication 1, **caractérisé en ce qu'**il comprend des éléments de réfrigération disposés dans la chambre d'inversion de gaz en question.

8. Appareil pour le traitement catalytique de gaz selon les revendications 1 à 6, **caractérisé en ce que** la bande est recouverte d'un catalyseur sur le côté entrée de la bande et éventuellement aussi sur le côté sortie de la bande.

9. Appareil pour le traitement catalytique de gaz selon les revendications 1 à 6, **caractérisé en ce que** la bande est recouverte d'un catalyseur seulement sur le côté sortie de la bande.

10. Appareil pour le traitement catalytique de gaz selon les revendications 1 à 6, **caractérisé en ce que** les deux côtés de la bande sont recouverts d'un type différent de catalyseur.

11. Appareil pour le traitement catalytique de gaz selon les revendications 1 à 9, **caractérisé en ce que** la bande est recouverte d'un catalyseur seulement sur les parties de la bande les plus proches des chambres d'inversion de gaz (4, 5).

## Patentansprüche

1. Gerät zur katalytischen Behandlung von Gasgemischen, umfassend einen Wärmeaustauscher, der mindestens einen Einlass und mindestens einen Auslass aufweist, wobei:
a) ein Katalysator auf einer Trennwand aufgebracht ist, die dem Katalysator als Träger dient,
b) die Trennwand aus einem geformten, strukturierten Band aus Metall oder Keramik besteht, das ziehharmonikaartig zu einem Paket (1) gefaltet ist.
c) das Paket wechselweise angeordnete Kanäle formt, wobei der Wärmeaustausch zwischen den Kanälen durch das Bandmaterial erfolgt, die Geometrie der Kanäle durch die Faltung und die geformte Struktur des Bands bestimmt wird, und
d) das Paket (1) in einem Gehäuse (2) untergebracht ist,
**dadurch gekennzeichnet, dass** die wechselweise angeordneten Kanäle im Paket (1) mit einem Einlass oder einem Auslass (3, 6) des Gehäuses (2) verbunden sind, die an den Seiten angeordnet sind, d.h. an den Ebenen, die durch die Falzlinien des Pakets (1) gebildet werden, und mit Gasumkehrkammern (4, 5), die jeweils an beiden Enden, d.h. an den Enden der Falzlinien des Pakets (1), so angeordnet sind, dass, wenn Gas durch das Gerät strömt, die Wärme zwischen den einlaufenden und den auslaufenden Strömen ausgetauscht wird, wenn die Strömungsrichtung von einer Einlaufrichtung am Einlass (3), der in einem Winkel zu den Bandfalten angeordnet ist, in entgegen gesetzte Richtungen wechselt, entlang einer ersten Seite des Bands im Paket (1), und von dort, nach der Umkehr in der Gasumkehrkammer (4, 5) außerhalb der Enden des Pakets (1), zur entgegen gesetzten Seite wechselt, die der ersten Seite des Pakets (1) gegenüberliegt, wobei es entlang der Falzlinien der Bandfalten in die Gegenrichtung strömt, und von dort aus zu einer Auslaufrichtung im Auslass (6), der in einem Winkel zu diesen Bandfalten angeordnet ist.

2. Abgaskatalysator nach Anspruch 1, **dadurch gekennzeichnet, dass** in mindestens einer der Gasumkehrkammern (4, 5) Geräte untergebracht sind, welche die Temperatur des durch diese Kammern strömenden Gases regeln und beeinflussen, wobei diese Geräte vorzugsweise Heizgeräte (7, 8) sind.

3. Abgaskatalysator nach Anspruch 2, **dadurch gekennzeichnet, dass** in mindestens einer der Gasumkehrkammern das Heizgerät ein elektrisches Heizgerät ist.

4. Abgaskatalysator nach Anspruch 2, **dadurch gekennzeichnet, dass** er Heizgeräte mit Brennern umfasst, die Flüssiggas oder Flüssigbrennstoff verwenden.

5. Abgaskatalysator nach Anspruch 1, **dadurch gekennzeichnet, dass** er geeignet ist, mindestens eine der Gasumkehrkammern (4, 5) durch Heißgasversorgung zu erwärmen.

6. Abgaskatalysator nach Anspruch 1, **dadurch gekennzeichnet, dass** er geeignet ist, mindestens eine der Gasumkehrkammern (4, 5) durch Kaltgasversorgung zu kühlen.

7. Abgaskatalysator nach Anspruch 1, **dadurch gekennzeichnet, dass** er Kühlelemente umfasst, die in der betreffenden Gasumkehrkammer angeordnet sind.

8. Abgaskatalysator nach einem der Ansprüche 1 - 6, **dadurch gekennzeichnet, dass** das Band auf seiner Einlassseite und möglicherweise auch auf seiner Auslassseite mit einem Katalysator beschichtet ist.

9. Abgaskatalysator nach einem der Ansprüche 1 - 6, **dadurch gekennzeichnet, dass** das Band nur auf seiner Auslassseite mit einem Katalysator beschichtet ist.

10. Abgaskatalysator nach einem der Ansprüche 1 - 6, **dadurch gekennzeichnet, dass** die beiden Seiten des Bands jeweils mit einem anderen Katalysator beschichtet sind.

11. Abgaskatalysator nach einem der Ansprüche 1 - 9, **dadurch gekennzeichnet, dass** das Band nur an den Bandabschnitten, die den Gasumkehrkammern (4, 5) am nächsten liegen, mit einem Katalysator beschichtet ist.
